# EUROPEAN PATENT SPECIFICATION

(11) **EP 0 648 624 B1**
(45) Date of publication and mention of the grant of the patent: **13.01.1999**
(21) Application number: 94307295.9
(22) Date of filing: 05.10.1994
(51) Int. Cl.: B60G 21/05

(54) **Dual compensating stabilizer**
Doppeltkompensierender Stabilisator
Stabilisateur à compensation double

(30) Priority: 14.10.1993 US 136336; 14.10.1993 US 136337
(43) Date of publication of application: 19.04.1995
(73) Proprietor: ILLINOIS TOOL WORKS INC., Glenview, Illinois 60025-5811 (US)
(72) Inventor: Parker, Eric G., County of Kane, Illinois (US); Spoto, Louis, Sleepy Hollow, Illinois 60118 (US); Hardy, Donald P., County of Allen, Indiana (US)
(74) Representative: Rackham, Stephen Neil

(56) References cited:
- AU-A- 8 093 375
- GB-A- 350 415

## Description

The present invention relates to a stabilizing system for use with a vehicle. More particularly, the present invention pertains to a stabilizing system for use in resisting rolling motion of a vehicle.

A variety of suspension systems are available to minimize and control the vibrations, jostling, as well as other vehicle displacements such as roll associated with a moving vehicle. A vehicle suspension system usually includes a suspension assembly positioned between opposing wheels of the vehicle and attached to the vehicle inboard of the wheels. The suspension assembly includes a connection point or steering knuckle associated with each wheel providing an axis about which the wheel rotates and carried by a control arm assembly pivotally associated with a cross member which is attached to the vehicle frame. A control arm and a biasing or spring assembly operatively connected to the control arm are provided such that when the control arm is pivotally displaced, the biasing assembly dampens the shock of the displacement to minimize or prevent transmission throughout the vehicle.

GB 350415 discloses a vehicle stabilizer in which two parallel ridged arms surround the vehicle axle loosely, the arms being provided on a rocking transverse spindle. This maintains the vehicle chassis generally parallel to the axle whilst allowing some relative movement between the axle and chassis in the vertical direction, but preventing relative lateral movement. In preferred examples disclosed in this prior art, an elastic connection is provided between the spindle and axle.

With a more specific view towards prior art suspension systems, a widely used form of suspension system employs a rigid cross member or assembly attached to the vehicle frame having a pivotal control arm assemblies pivotally attached to opposed ends of the cross member. As the vehicle makes a turn, the body of the vehicle tends to roll away from the direction of the turn. In order to dampen or minimize the rolling effect, a stabilizing assembly or system such as a torsion bar has been used to transfer a portion of the energy resulting from the rolling action from one side of the vehicle to the other. Prior art torsion bars are generally constructed using a heavy gauge, steel bar or group of bars which are attached to the suspension assembly so that a degree of road shock and roll energy is transferred to twisting the torsion bar. Such a torsion bar mounts to the frame or chassis and to control arms at opposite ends.

The energy or force transferred to twisting the torsion bar can be rather substantial. In this regard, prior art torsion bars are typically large, heavy steel bars in order to achieve the necessary spring force to resist or counteract such forces and control body roll. Such prior art torsion bars may weigh 7 to 15 lbs. (3 to 7 kg) or more. These prior art torsion bars occupy considerable space within the engine compartment and in the rear suspension area and may extend away from the suspension assemblies to provide sufficient clearance for twisting.

Another problem with prior art torsion bars is that such stabilizing assemblies are sensitive to single wheel impacts. In this regard, when a single wheel of the suspension is impacted, the torsion bar twists significantly. When the torsion bar relaxes, the spring rate or potential energy which was transferred to the torsion bar is combined with the suspension's spring rate. As such, prior art torsion bars may actually produce a jostling effect in single wheel impacts. This condition has a very negative effect on the ride comfort for the occupants of the vehicle and the handling of the vehicle.

Prior art torsion bars may also be designed to be adjustable such that a desired torsional resistance may be pre-loaded into the bar to adjust the amount of force required to twist the bar. The adjustable torsion bars often require two large, heavy metal bars, one each mounted to a corresponding control arm assembly and extending inwardly adjacent to the suspension assembly. Each bar terminates at spaced apart locations on the frame and includes an adjustable mounting member. The mounting members for such an adjustable torsion bar assembly can be quite cumbersome and heavy in order to sufficiently mount and resist the twisting forces associated with the corresponding torsion bar.

As can be appreciated from the above brief description, prior art torsion bars respond not only to roll forces but also to single wheel impact forces. Such torsion bars are usually quite heavy, occupy considerable space and thus, require many design considerations in order to accommodate the characteristics of the heavy weight and considerable space usage associated with such torsion bars. Additionally, such prior art torsion bars involve substantial manufacturing costs and component tracking and storage overhead due to the large dimensional size and weight of such torsion bars and the numerous components required to attach and/or adjustably secure such torsion bars.

It would be desirable to isolate single wheel impact action from roll action and to substantially reduce the weight associated with and space occupied by a stabilizing assembly while maintaining the desired force dampening effects. Many new vehicles require improved safety features and greater fuel efficiency. Weight and space saved by reducing the space used and weight added by a torsion assembly could be utilized for safety features or to minimize overall vehicle weight and size thereby improving fuel efficiency.

AU-A-80 933/75 discloses a vehicle suspension system in which the stub axles for each of the front wheels are connected to the vehicle chassis by a parallelogram arrangement of links. To prevent roll, a flexible chain or cable is provided between the links supporting each stub axle, and additional flexible chains or cables connect each link supporting a stub axle to the opposite link of the respective parallelogram arrangement.

For the foregoing reasons, there is a need for a stabilizing system for use with a suspension system which substantially reduces the weight associated with the stabilizing system and substantially minimizes the space occupied by such a system. The benefits of such a stabilizing system could substantially improve the space utilization and reduce the weight associated with a vehicle and provide expanded design choices with regard to space and vehicle weight.

According to this invention a stabilizing system for use with a vehicle suspension, said suspension having first and second oppositely positioned control arm assemblies comprises:
first and second anchor means operatively associated with said each of said first and second oppositely positioned control arm assemblies;
first and second linking means for tensionably linking said opposed control arm assemblies, said first linking means operatively connected to and extending between said first anchor on said first control arm assembly and said second anchor means on said second control arm assembly, said second linking means operatively connected to and extending between said second anchor means on said first control arm assembly and said first anchor means on said second control arm assembly, said first and second linking means transferring a force imposed on one of said control arm assemblies to the other of said control arm assemblies; and
first and second guide means for guiding said linking means between said first and second control arm assemblies, each of said guides being positioned above or below said first and second anchor means, each of said linking means, alternately, weaving over said first guide means and under said second guide means.

Briefly, one particular embodiment of the present invention envisions a stabilizing system for use with a vehicle suspension which employs a first and second strap or other flexible tension member associated with and extending between opposite control arm assemblies of the suspension. A first end of each strap is anchored to a corresponding control arm assembly. A second end, distal the first end, of each strap is anchored to the control arm assembly distal the first end. Each strap, alternately, weaves over and under at least two guides associated with and positioned between the path of the straps. The guides and/or bushings associated with the anchor points may be formed of a yieldable material to provide a yieldable biasing action on the straps. An adjustment assembly is associated with each strap to pre-load the associated strap to a desired tension. The stabilizing system occupies space between the control arm assemblies and is very lightweight due to the thin belt like characteristics of the straps. The stabilizing system functions to transfer forces imposed on one control assembly to the opposite control arm assembly by alternately placing an associated strap in tension or allowing the other strap to go slack. The flexible tension members or straps are preferably connected to the control arms at locations tending to minimize the effect of single wheel impact loads.

Particular embodiments in accordance with the invention will now be described with reference to the accompanying drawings, wherein like reference numerals identify like elements, and in which:-
FIG. 1 is a partial fragmentary perspective view of a generalized vehicle suspension employing an embodiment of the stabilizing system;
FIG. 2 is a plan view of the suspension shown in FIG. 1;
FIG. 3 is a simplified schematic representation of the stabilizing system as shown in FIGS. 1 and 2;
FIG. 4 is a simplified schematic representation of a stabilizing system which is substantially similar to the system as shown in FIG. 3 further incorporating an adjustment assembly to adjustably set the pre-loaded tension in straps used in the system;
FIG. 5A is an enlarged partial fragmentary cross sectional view of one of the anchor points having a bushing retained thereon with a strap attached thereto; and
FIG. 5B is an enlarged perspective view of a-strap passing over a guide associated with a corresponding pivot shaft.

While the invention may be susceptible to embodiment in different forms, there is shown in the drawings, and herein will be described in detail, embodiments with the understanding that the present description is to be considered an exemplification of the principles of the invention and is not intended to limit the invention to that as illustrated and described herein.

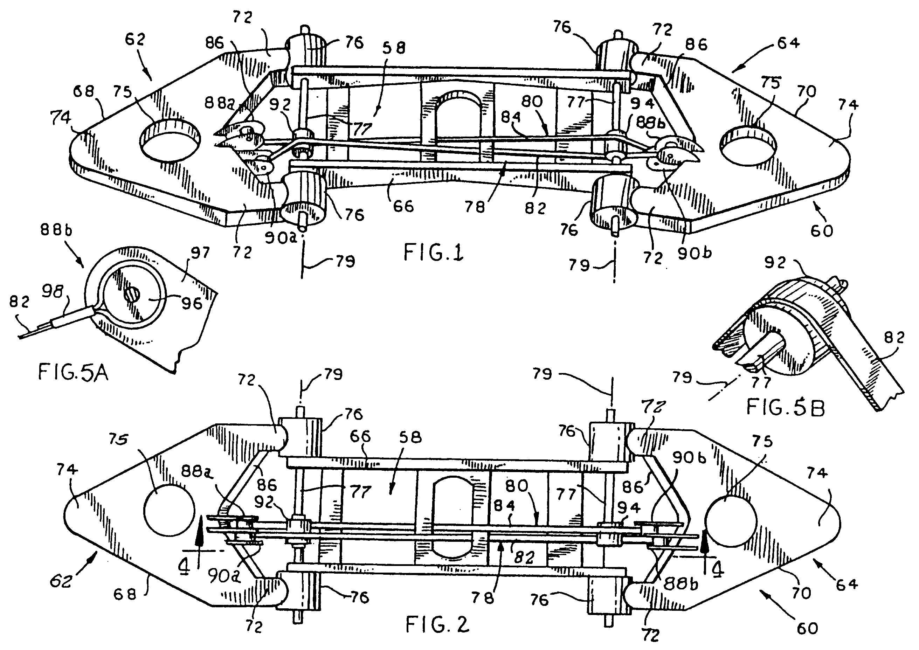

FIGS. 1 to 5B show a stabilizing system. The stabilizing system 58 is constructed for use with a vehicle suspension 60 as shown in FIGS. 1 to 5B. Such a suspension system includes a first and second control arm assembly 62, 64 which are pivotally attached to opposite ends of a cross-member 60. The control arm assemblies 62, 64 include corresponding first and second bifurcated control arms 68, 70 each having two spaced apart branches 72, 72 which join in a common connecting head 74. The connecting head 74 is operatively associated with a steering knuckle (not shown) of known construction and may include a shock absorbing assembly of known construction (not shown) operatively associated with the recess 75 in the connecting head 74. Each of the branches 72 terminates in a pivot knuckle 76. A pivot shaft 77 extends through the two pivot knuckles 76 of each control arms 68, 70 and through corresponding portions of the cross-member 66 to provide a pivoting action between the control arms 68, 70 and the cross-member 66. The pivot shaft defines a pivot axis 79 about which the control arms 68, 70 rotate.

The construction of bifurcated control arms 68, 70 pivotally attached to a cross-member 66 is known in the art and provides a structural foundation for the present invention. The present invention positions the stabilizing system 58 between the control arm 68, 70 to provide a stabilizing system 58 which is highly responsive to vehicle roll yet is less sensitive to wheel impacts. As shown in FIG. 2, the stabilizing system 58 includes a first and second means 78, 80 for tensionably linking the oppositely disposed first and second control arms 68, 70. The first and second linking means 78, 80 include a first and second flexible elongated tension member or strap 82, 84 extending between and attached to a medial portion 86 located between the branches 72, 72 of the control arms 68, 70.

First and second anchors 88, 90 are attached to the medial area 86 of each control arm 68, 70 proximate to and positioned above (88) or below (90) the pivot axis 79. The first and second anchors 88, 90 associated with the first control arm are identified as first anchor 88a and second anchor 9Oa and the first and second anchor associated with the second control arm 70 are identified as first anchor 88b and second anchor 90b. The straps 82, 84 weave between the anchors 88a, 90b and 88b, 90a under and over first guide means 92 retained proximate to the first control arm 68 and under and over second guide means 94 retained proximate to the second control arm 70.

The first strap 82 is attached to the second anchor 9Oa and extends upwardly over the first guide 92 towards the second control arm 70. The strap 82 then weaves under the second guide 94 and upwardly to the first anchor 88b. Similarly, the second strap 84 attaches to the first anchor 88a and extends downwardly under the first guide 92 towards the second control arm 70 and weaves over the second guide 94 and then downwardly to connect to the second anchor 9Ob. In other words, the first and second straps 82, 84 weave mirror image paths between the first and second anchors 88, 90 attached to the spaced apart control arms 68, 70. As can be seen in the illustrations, the first anchors 88a, 88b are positioned relative to the corresponding guides 92, 94 so that the strap anchored thereto follows a course downwardly to pass under the corresponding guide. In a similar manner, the second anchors 90a, 90b are positioned so that the strap anchored thereto must extend upwardly therefrom to pass over the corresponding guide. Further, the first and second guides 92, 94 are retained on the corresponding pivot shafts 77, 77.

FIGS. 5A and 5B provide enlarged detailed views of the first strap attached to the first anchor 88b and the first strap 82 passing over the first guide 92. FIG. 6A provides a partial fragmentary cross sectional view through the first anchor 88b. As shown in FIG. 6A, the strap 82 wraps around a bushing 96 which is pivotally retained on an anchor bracket 97 of the anchor 88b. The strap 82 wraps around the bushing 96 and is secured by means of a buckle or crimping fastener 98 of known construction. The bushings 96 are generally formed of an elastomeric material such as urethane or a rubber composition which has a desired degree of compressibility so that the bushings 96 yield when a force is applied thereto upon tensioning the corresponding strap 82, 84.

With regard to FIG. 5B, a single pulley or bushing of the first guide 92 is shown rotatably positioned on the pivot shaft 77 with the strap 82 passing thereover. Each of the guides 92, 94 includes two bushings, one each associated with the corresponding strap overlying or passing thereunder. The first guide 92 is representative of the first and second guides 92, 94. The guides 92, 94 may be a pulley formed of a rigid material and pivotally retained on the pivot shaft 77 or may be formed of an elastomeric material such as urethane or a rubber composition which has a desired degree of compressibility so that the guide 92, 94 yields when a force is applied thereto upon tensioning the corresponding strap 82, 84. As will be discussed with further detail herein-below, the yieldability of the bushings 96 and/or guides 92, 94 is important to the functioning of the present invention.

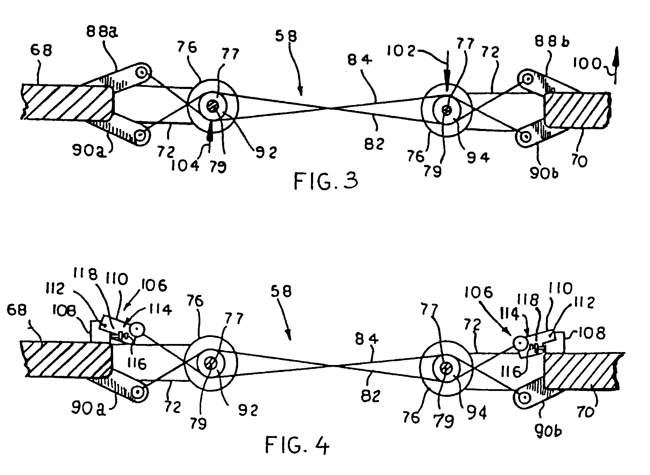

FIG. 3 provides a simplified schematic cross sectional view taken along line 4-4 in FIG. 2. In use, the stabilizing system 58 of the present invention provides dual compensating stabilization of forces applied to the control arms 68, 70. For example, with reference to control arm 70 an upward force (as indicated by arrow 100) will rotate the control arm 70 about the pivot shaft 77 thereby rotating and displacing the second anchor 90b away from the second guide 94. Displacement of the second anchor 90b imposes a downward force (as indicated by arrow 102) on the second guide means 94 and an upward force (as indicated by arrow 104) on the first guide 92. Since the corresponding bushings 96 and/or first and second guides 92, 94 are yieldable, forces 102 and 104 are dampened or absorbed to minimize transmission to the vehicle.

Forces which are displaced by the stabilizing system 58 originate generally at the connecting head 74 of the control arms 68, 70. The dimensional relationship of close positioning of the control arms 68, 70 and the anchors 88a, 88b, 90a, 90b relative to the pivot shaft 77 promotes stability in control and results in a stabilizing system 58 which is substantially less sensitive to single wheel impact. Large displacements which occur at the connecting head end 74 translate into much smaller displacements at the anchors 88, 90. A substantial portion of the forces imposed on the stabilizing system 58 are dampened or dissipated by the yieldable properties of the corresponding bushings 96 and/or first and second guides 92, 94.

Additionally, the present invention occupies substantially less space than prior art stabilizing systems. The thin band-like construction and dimensions of the straps 82, 84 occupy very little space and can be woven through openings in the cross-member 66 as shown in FIGS. 2 and 3. The efficient space utilization of the present invention further broaden other design considerations by vacating space which was once occupied by large cumbersome prior art systems. Furthermore, the overall weight of the stabilizing system 58 is approximately 3 lbs. (1.3 kg) including the bracket portions of the anchors, bushings, guides, and straps. The present invention results in a vehicle weight savings of approximately 5 to 10 lbs. (2 to 4.5 kg) over prior art systems.

As an additional matter, the stabilizing system 58 as shown in FIGS. 1 to 3 may also include an adjustment assembly 106. The adjustment assembly 106 replaces the first or second anchors. In FIG. 4 the first anchors 88a, 88b have been replaced. The adjustment assembly 106 includes a base bracket 108 attached to the respective control arms 68, 70, a pivot bracket 110 pivotally attached to the base bracket 108 by means of a pivot pin 112, and an adjustment means 114 which is shown as a threaded shaft 116 which bears against the a surface of the base bracket 108. The bushing 96 is pivotally retained on the pivot bracket 110 in a manner as discussed with reference to FIG. 5A. The strap is buckled to the bushing 96 and extends from the adjustment assembly 106.

The threaded shaft 116 is advanced through a co-operatively threaded nut portion 118 fixed to the pivot bracket 110 to advance or retreat relative to the base bracket 108. For example, if tension in the system should be increased, the threaded shaft 116 is advanced through the nut portion 118 against the base bracket 108 to rotate the bushing 96 upwardly relative to the pivot pin 112 thereby increasing the tension in the system. The adjustment assembly 106 provides the ability to fine tune the sensitivity of the stabilizing system by increasing or decreasing the normal or pre-loaded tension in the straps 82, 84. The ability to adjust the system can provide a soft rate to a firm rate ride by adjusting the pre-load tension in the straps.

In use, the first and second straps 82, 84 connect to the first and second control arms 68, 70 of the vehicle suspension assembly 60. The straps 82, 84 are weaved over and under the first and second guides 92, 94 and are wrapped around the corresponding bushings 96 retained on the respective first and second anchors 88, 90 attached to the control arms 68, 70. When cornering, the vehicle's body is subjected to forces which induce a rolling motion. The stabilizing system 58 restricts this motion by transferring forces generated by the rolling motion on one wheel to the other wheel.

For example, when the vehicle makes a right turn (the second control arm 70 being the right side of the vehicle), the body tends to roll to the right side thereby imposing forces on the control arm 70. The forces tend to pivot the control arm 70 upwardly relative to the cross-member 66 thereby rotating the first anchor 88b relative to the pivot shaft 77 to place the first strap 82 in tension. With increasing vehicle body roll, the tension in the strap increases. The resulting strap tension induces upward forces on the second guide 94 and downward forces on the first guide 92. The resulting roll couple acts to restrict the rolling motion of the vehicle body which is rigidly attached to the cross-member 66.

## Claims

1. A stabilizing system for use with a vehicle suspension, said suspension having first and second oppositely positioned control arm assemblies (62, 64), said stabilizing system comprising:
first and second anchor means (88, 90) operatively associated with said each of said first and second oppositely positioned control arm assemblies (62, 64);
first and second linking means (82, 84) for tensionably linking said opposed control arm assemblies (62, 64), said first linking means (82) operatively connected to and extending between said first anchor (90a) on said first control arm assembly (62) and said second anchor means (88b) on said second control arm assembly (64), said second linking means (84) operatively connected to and extending between said second anchor means (88a) on said first control arm assembly (62) and said first anchor means (90b) on said second control arm assembly (64), said first and second linking means (62, 64) transferring a force imposed on one of said control arm assemblies (62, 64) to the other of said control arm assemblies (64, 62); and
first and second guide means (92, 94) for guiding said linking means (82, 84) between said first and second control arm assemblies (62, 64), each of said guides (92, 94) being positioned above or below said first and second anchor means (88, 90), each of said linking means (82, 84), alternately, weaving over said first guide means (92, 94) and under said second guide means (92, 94).

2. A stabilizing system according to claim 2, wherein each of said first and second anchor means (88, 90) includes a bushing (96) formed of a yieldable material, said linking means (82, 84) defining a strap wrapped around an outside surface of the corresponding bushing (96), said bushings (96) having a degree of compressibility for dampening forces transferred thereto by said first and second linking means (82, 84).

3. A stabilising system according to claims 1 or 2, wherein at least one of said first and second guide means (92, 94) are formed of a yieldable material, said at least one of said first and second guide means (92, 94) having a degree of compressibility for dampening forces transferred thereto by said first and second elongated flexible members (82, 84).

4. A stabilising system according to any one of the preceding claims, wherein said linking means is an elongated flexible strap, a pair of straps (82, 84) operatively associated with and extending between said first and second control arm assemblies (62, 64), a first end of each of said straps (82, 84) operatively associated with a corresponding one of said control arm assemblies (62, 64), a second end of each of said straps operatively associated with a corresponding opposed control arm assembly (64, 62), said straps (82, 84) following mirror image courses between said first and second control arm assemblies (62, 64).

5. A stabilizing system according to any preceding claim, further comprising an adjustment assembly operatively associated with each of said first and second linking means (82,84) for controllably tensioning said associated linking means.

## Patentansprüche

1. Stabilisierungssystem zur Verwendung bei einer Fahrzeugaufhängung, wobei die Aufhängung eine erste und zweite einander gegenüberliegend angeordnete Steuerarmbaugruppe (62, 64) aufweist, wobei das Stabilisiersystem folgendes aufweist:
ein erstes und zweites Verankerungsmittel (88, 90), welche mit den ersten und zweiten einander gegenüberliegend angeordneten Steuerarmbaugruppen (62, 64) zusammenwirken,
einem ersten und zweiten Verbindungsmittel (82, 84) zum spannbaren Verbinden der einander gegenüberliegenden Steuerarmbaugruppen (62, 64), wobei das erste Verbindungsmittel (82) zusammenwirkt mit und sich erstreckt zwischen der ersten Verankerung (90a) auf der ersten Steuerarmbaugruppe (62) und dem zweiten Verankerungsmittel (88b) auf der zweiten Steuerarmbaugruppe (64), wobei das zweite Verbindungsmittel (84) zusammenwirkt mit und sich erstreckt zwischen dem zweiten Verankerungsmittel (88a) auf der ersten Steuerarmbaugruppe (62) und dem zweiten Verankerungsmittel (90b) auf der zweiten Steuerarmbaugruppe (64), wobei das erste und zweite Verbindungsmittel (62, 64) eine Kraft übertragen, welche von einer der Steuerarmbaugruppen (62, 64) auf die andere der Steuerarmbaugruppen (64, 62) ausgeübt wird, und
einem ersten und zweiten Führungsmittel (92, 94) zum Führen der Verbindungsmittel (82, 84) zwischen der ersten und zweiten Steuerarmbaugruppe (62, 64), wobei jede der Führungen (92, 94) ober- oder unterhalb des ersten und zweiten Verankerungsmittels (88, 90) angeordnet ist, wobei jedes der Verbindungsmittel (82, 84) alternativ über das erste Führungsmittel (92, 94) und unter das zweite Führungsmittel (92, 94) gewoben ist.

2. Stabilisiersystem nach Anspruch 1, wobei jedes der ersten und zweiten Verankerungsmittel (88, 90) eine aus nachgiebigem Material geformte Buchse (96) aufweist, wobei die Verbindungsmittel (82, 84) einen um eine Außenfläche der entsprechenden Buchse (96) herumgeschlungenen Gurt definieren, wobei die Buchsen (96) eine Kompressibilität derart aufweisen, daß sie von dem ersten und zweiten Verbindungsmittel (82, 84) darauf übertragene Kräfte dämpfen.

3. Stabilisiersystem nach Anspruch 1 oder 2, wobei mindestens eines der ersten und zweiten Führungsmittel (92, 94) aus nachgiebigem Material gebildet ist, wobei mindestens eines der ersten und zweiten Führungsmittel (92, 94) eine Kompressibilität derart aufweist, daß sie von dem ersten und zweiten länglichen flexiblen Teil (82, 84) darauf übertragene Kräfte dämpfen.

4. Stabilisiersystem nach einem der vorhergehenden Ansprüche, wobei das Verbindungsmittel ein länglicher flexibler Gurt ist, wobei ein Paar Gurte (82, 84) zusammenwirkt mit und sich erstreckt zwischen der ersten und zweiten Steuerarmbaugruppe (62, 64), wobei ein erstes Ende jedes der Gurte (82, 84) zusammenwirkt mit einer entsprechenden der Steuerarmbaugruppen (62, 64), wobei ein zweites Ende jedes der Gurte zusammenwirkt mit einer entsprechenden gegenüberliegenden Steuerarmbaugruppe (64, 62), wobei die Gurte (82, 84) spiegelbildlichen Verläufen zwischen der ersten und zweiten Steuerarmbaugruppe (62, 64) folgen.

5. Stabilisiersystem nach einem der vorhergehenden Ansprüche, zusätzlich mit einer Einstellbaugruppe, welche mit jedem der ersten und zweiten Verbindungsmittel (82, 84) zusammenwirkt, um die zugeordneten Verbindungsmittel kontrollierbar zu spannen.

## Revendications

1. Système stabilisateur destiné à être utilisé dans une suspension d'un véhicule, ladite suspension ayant des premier et second ensembles de bras de commande (62, 64) positionnés à l'opposé l'un de l'autre, ledit système stabilisateur comprenant:
des premier et second moyens d'ancrage (88, 90) fonctionnellement associés à chacun desdits premier et second ensembles de bras de commande (62, 64) positionnés à l'opposé l'un de l'autre;
des premier et second moyens de liaison (82, 84) destinés à relier de façon tendue lesdits ensembles de bras de commande opposés (62, 64) l'un à l'autre, ledit premier moyen de liaison (82) étant fonctionnellement relié à, et s'étendant entre, ledit premier ancrage (90a) aménagé sur ledit premier ensemble de bras de commande (62) et ledit second moyen d'ancrage (88b) aménagé sur ledit second ensemble de bras de commande (64), ledit second moyen de liaison (84) étant fonctionnellement relié à, et s'étendant entre, ledit second moyen d'ancrage (88a) aménagé sur ledit premier ensemble de bras de commande (62) et ledit premier moyen d'ancrage (90b) aménagé sur ledit second ensemble de bras de commande (64), lesdits premier et second moyens de liaison (62, 64) transférant une force appliquée à l'un desdits ensembles de bras de commande (62, 64) à l'autre desdits ensembles de bras de commande (64, 62); et
des premier et second moyens de guidage (92, 94) destinés à guider lesdits moyens de liaison (82, 84) entre lesdits premier et second ensembles de bras de commande (62, 64), chacun desdits guides (92, 94) étant positionné au-dessus ou en dessous desdits premier et second moyens d'ancrage (88, 90), chacun desdits moyens de liaison (82, 84) s'enfilant, en alternance, par-dessus ledit premier moyen de guidage (92, 94) et par-dessous ledit second moyen de guidage (92, 94).

2. Système stabilisateur selon la revendication 2, dans lequel chacun desdits premier et second moyens d'ancrage (88, 90) comprend un coussinet (96) réalisé en une matière cédant élastiquement, lesdits moyens de liaison (82, 84) formant une sangle enroulée autour d'une face extérieure du coussinet correspondant (96), lesdits coussinets (96) présentant un degré de compressibilité permettant d'amortir les forces transférées à ceux-ci par lesdits premier et second moyens de liaison (82, 84).

3. Système stabilisateur selon les revendications 1 ou 2, dans lequel l'un au moins desdits premier et second moyens de guidage (92, 94) est réalisé en une matière cédant élastiquement, ledit au moins un des premier et second moyens de guidage (92, 94) présentant un degré de compressibilité permettant d'amortir les forces transférées à celui-ci par lesdits premier et second éléments allongés flexibles (82, 84).

4. Système stabilisateur selon l'une quelconque des revendications précédentes, dans lequel lesdits moyens de liaison sont constitués d'une sangle allongée flexible, une paire de sangles (82, 84) étant fonctionnellement associée à, et s'étendant entre, lesdits premier et second ensembles de bras de commande (62, 64), une première extrémité de chacune desdites sangles (82, 84) étant fonctionnellement associée à un ensemble correspondant parmi lesdits ensembles de bras de commande (62, 64) , une seconde extrémité de chacune desdites sangles étant fonctionnellement associée à un ensemble de bras de commande correspondant opposé (64, 62), lesdites sangles (82, 84) suivant des parcours symétriques par rapport à un miroir entre lesdits premier et second ensembles de bras de commande (62, 64).

5. Système stabilisateur selon l'une quelconque des revendications précédentes, comprenant en outre un ensemble de réglage fonctionnellement associé à chacun desdits premier et second moyens de liaison (82, 84), de manière à tendre de façon réglable lesdits moyens associés de liaison.
